(19)

Europäisches
Patentamt
European
Patent Office
Office européen
des brevets

(11) **EP 4 280 330 A1**

(12) **EUROPEAN PATENT APPLICATION**
published in accordance with Art. 153(4) EPC

(43) Date of publication:
**22.11.2023 Bulletin 2023/47**

(21) Application number: **22759552.7**

(22) Date of filing: **21.02.2022**

(51) International Patent Classification (IPC):
*H01M 10/052* (2010.01)   *H01G 11/06* (2013.01)
*H01G 11/38* (2013.01)   *H01G 11/42* (2013.01)
*H01G 11/60* (2013.01)   *H01M 4/133* (2010.01)
*H01M 4/587* (2010.01)   *H01M 4/62* (2006.01)
*H01M 10/0566* (2010.01)   *H01M 10/0569* (2010.01)

(52) Cooperative Patent Classification (CPC):
H01G 11/06; H01G 11/38; H01G 11/42;
H01G 11/60; H01M 4/133; H01M 4/587;
H01M 4/62; H01M 10/052; H01M 10/0566;
H01M 10/0569; Y02P 70/50

(86) International application number:
**PCT/JP2022/006853**

(87) International publication number:
**WO 2022/181516 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **25.02.2021   JP 2021029273**

(71) Applicant: **GS Yuasa International Ltd.
Kisshoin, Minami-ku,
Kyoto-shi, Kyoto 601-8520 (JP)**

(72) Inventors:
• **OGI Kenta**
  **Kyoto-shi, Kyoto 601-8520 (JP)**
• **KUMABAYASHI Kei**
  **Kyoto-shi, Kyoto 601-8520 (JP)**
• **NAKANO Fumiya**
  **Kyoto-shi, Kyoto 601-8520 (JP)**
• **ITAI Yuhei**
  **Kyoto-shi, Kyoto 601-8520 (JP)**

(74) Representative: **Isarpatent
Patent- und Rechtsanwälte
Barth Hassa Peckmann & Partner mbB
Friedrichstraße 31
80801 München (DE)**

(54)   **NONAQUEOUS ELECTROLYTE POWER STORAGE ELEMENT**

(57)   A nonaqueous electrolyte energy storage device according to an aspect of the present invention includes: a negative electrode including a negative composite layer containing a negative active material; a positive electrode; and a nonaqueous electrolyte containing a nonaqueous solvent, in which the nonaqueous solvent contains diethyl carbonate, the negative composite layer contains a nonaqueous binder, the negative active material contains non-graphitizable carbon; and an amount of charge B [mAh/g] of the negative electrode in a full charge state satisfies the following Formula 1 when a true density of non-graphitizable carbon is A [g/cm$^3$].

$$-600 \times A + 1300 \leq B \leq -830 \times A + 1800 \quad \ldots 1$$

EP 4 280 330 A1

Fig. 3

**Description**

TECHNICAL FIELD

The present invention relates to a nonaqueous electrolyte energy storage device.

BACKGROUND ART

Nonaqueous electrolyte secondary batteries typified by lithium ion nonaqueous electrolyte secondary batteries are widely used in electronic equipment such as personal computers and communication terminals, motor vehicles, and the like because the batteries are high in energy density. The nonaqueous electrolyte secondary battery is generally provided with an electrode assembly with a pair of electrodes electrically isolated by a separator, and a nonaqueous electrolyte interposed between the electrodes and is configured to be charged and discharged by transferring ions between both the electrodes. In addition, capacitors such as lithium ion capacitors and electric double layer capacitors are also widely used as nonaqueous electrolyte energy storage devices other than the nonaqueous electrolyte secondary batteries.

As an active material of a negative electrode of such a nonaqueous electrolyte energy storage device, carbon materials such as graphite, non-graphitic carbon, and amorphous carbon are widely used. For example, for the purpose of increasing the capacity of the nonaqueous electrolyte energy storage device, a lithium ion secondary battery has been proposed in which non-graphitizable carbonaceous material having a large chargeable-dischargeable capacity per unit mass is used as a negative active material (see Patent Document 1).

PRIOR ART DOCUMENT

PATENT DOCUMENT

Patent Document 1: JP-A-07-335262

SUMMARY OF THE INVENTION

PROBLEMS TO BE SOLVED BY THE INVENTION

However, when the depth of charge of the negative electrode is increased by using non-graphitizable carbon as the negative active material for the purpose of increasing the capacity of the nonaqueous electrolyte energy storage device, the potential of the negative electrode becomes low, and the deposition of charge support metals such as metal lithium may cause deterioration in durability. In particular, in a case where gas is generated by decomposition of the nonaqueous electrolyte, the resistance increases in the region where the distance between the positive and negative electrodes is increased by accumulation of the gas, and thus the deposition of charge support metals such as metal lithium is likely to be remarkable. Hence, in a case where the depth of charge of the negative electrode is increased by using non-graphitizable carbon as the negative active material for the purpose of increasing the capacity of the nonaqueous electrolyte energy storage device as well, there is a demand for a nonaqueous electrolyte energy storage device that is excellent in the effect of suppressing the deposition of charge support metals such as metal lithium.

The present invention has been made in view of the above circumstances, and an object thereof is to provide a nonaqueous electrolyte energy storage device that is excellent in the effect of suppressing deposition of charge support metals in a case where the depth of charge of a negative electrode is increased by using non-graphitizable carbon as a negative active material.

MEANS FOR SOLVING THE PROBLEMS

A nonaqueous electrolyte energy storage device according to an aspect of the present invention includes: a negative electrode including a negative composite layer containing a negative active material; a positive electrode; and a nonaqueous electrolyte containing a nonaqueous solvent, in which the nonaqueous solvent contains diethyl carbonate, the negative composite layer contains a nonaqueous binder, the negative active material contains non-graphitizable carbon; and an amount of charge B [mAh/g] of the negative electrode in a full charge state satisfies the following Formula 1 when a true density of non-graphitizable carbon is A [g/cm$^3$].

$$-600 \times A + 1300 \leq B \leq -830 \times A + 1800 \quad \ldots 1$$

ADVANTAGES OF THE INVENTION

According to the present invention, it is possible to provide a nonaqueous electrolyte energy storage device that is excellent in the effect of suppressing deposition of charge support metals in a case where the depth of charge of a negative electrode is increased by using non-graphitizable carbon as a negative active material.

BRIEF DESCRIPTION OF THE DRAWINGS

Fig. 1 is a schematic see-through perspective view illustrating the configuration of a nonaqueous electrolyte energy storage device according to an embodiment of the present invention.
Fig. 2 is a schematic view illustrating an energy storage apparatus configured by assembling a plurality of nonaqueous electrolyte energy storage devices according to an embodiment of the present invention.
Fig. 3 is a graph illustrating the relation between a true density of non-graphitizable carbon in a negative active material and an amount of charge of a negative electrode in a full charge state in Test Example.

MODE FOR CARRYING OUT THE INVENTION

First, the outline of a nonaqueous electrolyte energy storage device disclosed in the present specification will be described.
As a result of various experiments, the present inventors have realized that there is a certain correlation between the true density A of non-graphitizable carbon contained in a negative composite layer and the amount of charge support ions (amount of charge B) that can be stored while the deposition of charge support metals (lithium in the case of a lithium ion secondary battery) on non-graphitizable is suppressed, and have found out that the deposition of charge support metals can be more effectively suppressed by using a nonaqueous solvent contained in a specific nonaqueous electrolyte and a binder for the negative composite layer, thereby completing the present invention.
A nonaqueous electrolyte energy storage device according to an aspect of the present invention includes: a negative electrode including a negative composite layer containing a negative active material; a positive electrode; and a nonaqueous electrolyte containing a nonaqueous solvent, in which the nonaqueous solvent contains diethyl carbonate, the negative composite layer contains a nonaqueous binder, the negative active material contains non-graphitizable carbon; and an amount of charge B [mAh/g] of the negative electrode in a full charge state satisfies the following Formula 1 when a true density of non-graphitizable carbon is A [g/cm$^3$].

$$-600 \times A + 1300 \leq B \leq -830 \times A + 1800 \quad \dots 1$$

The nonaqueous electrolyte energy storage device is excellent in the effect of suppressing the deposition of charge support metals in a case where the depth of charge of the negative electrode is increased by using non-graphitizable carbon as a negative active material for the purpose of increasing the capacity of the nonaqueous electrolyte energy storage device as well. The reason for this is not clear, but the following reasons are presumed. In a case where non-graphitizable carbon is used as a negative active material, when the depth of charge of the negative electrode is increased, a negative electrode potential becomes low, and charge support metals may be likely to be deposited. As described above, particularly in a case where gas is generated by decomposition of the nonaqueous electrolyte, the deposition of charge support metals is likely to be remarkable. Therefore, when diethyl carbonate, which is less likely to generate gas, is used as a nonaqueous solvent contained in the nonaqueous electrolyte, the deposition of charge support metals is considered to be suppressed. However, the present inventors have found out that the binding property decreases and the negative composite layer is peeled off when the negative composite layer contains an aqueous binder in a case where diethyl carbonate is used as a nonaqueous solvent contained in the nonaqueous electrolyte in a state where the negative electrode potential is lowered. It is presumed that this is because decomposition of the aqueous binder contained in the negative composite layer is promoted when diethyl carbonate is used as a nonaqueous solvent contained in the nonaqueous electrolyte in a state where the negative electrode potential is lowered.
In the nonaqueous electrolyte energy storage device, when the true density of non-graphitizable carbon is A [g/cm$^3$], as the amount of charge B [mAh/g] of the negative electrode in a full charge state is -830 × A + 1800 or less, the amount of charge B has an appropriate size, the depth of charge of the negative electrode does not increase too much, and it is thus possible to suppress occurrence of the deposition of charge support metals. When the amount of charge B of the negative electrode is in a range of -600 × A + 1300 or more, as diethyl carbonate, which is less likely to generate gas, is used as a nonaqueous solvent contained in the nonaqueous electrolyte and a nonaqueous binder is used as a binder for the negative composite layer, it is possible to effectively suppress the deposition of charge support metals while suppressing peeling off of the negative composite layer. Hence, the nonaqueous electrolyte energy storage device is excellent in the effect of suppressing the deposition of charge support metals in a case where the depth of charge of the negative electrode is increased by using non-graphitizable carbon as a negative active material.

Here, the "full charge state" refers to a state where the battery is charged with electricity to the rated upper limit voltage to secure the rated capacity determined by battery design, and typically refers to a state where the battery is charged with electricity to the end-of-charge voltage for normal use (that is, when the nonaqueous electrolyte energy storage device is used under the charge-discharge conditions recommended or specified for the nonaqueous electrolyte energy storage device). In a case where the rated capacity is not described, the "full charge state" refers to a state where the nonaqueous electrolyte energy storage device is charged with electricity using a charge control apparatus adopted by the nonaqueous electrolyte energy storage device, and the nonaqueous electrolyte energy storage device is charged with electricity to the end-of-charge voltage when the charge operation is controlled to be stopped. For example, a state where the nonaqueous electrolyte energy storage device is subjected to constant current charge at a current of (1/3) C to the rated upper limit voltage or end-of-charge voltage and then constant voltage charge until the current reaches 0.01 C at the rated upper limit voltage or end-of-charge voltage is a typical example of the "full charge state" referred to herein. The "aqueous binder" means a binder that can be dissolved or dispersed in an aqueous solvent when a composite paste is prepared. The "nonaqueous binder" means a binder that can be dissolved or dispersed in an organic solvent when a composite paste is prepared.

It is preferable that the amount of charge B [mAh/g] of the negative electrode in a full charge state satisfies the following Formula 2.

$$\text{-}600 \times A + 1400 \le B \le \text{-}830 \times A + 1800 \quad \dots 2$$

As the amount of charge B of the negative electrode in a full charge state is -600 × A+ 1400 or more, the capacity retention ratio of the nonaqueous electrolyte energy storage device can be further improved.

It is preferable that the content of diethyl carbonate in the nonaqueous solvent is more than 60% by volume. As the content of diethyl carbonate in the nonaqueous solvent is more than 60% by volume, the effect of suppressing the deposition of charge support metals can be further improved.

The configuration of a nonaqueous electrolyte energy storage device according to an embodiment of the present invention, and other embodiments will be described in detail. The names of the respective constituent members (respective constituent elements) for use in the respective embodiments may be different from the names of the respective constituent members (respective elements) for use in the background art.

<Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present to be impregnated in the positive electrode, the negative electrode, and the separator. A nonaqueous electrolyte secondary battery (hereinafter, also simply referred to as a "secondary battery") will be described as an example of the nonaqueous electrolyte energy storage device.

[Negative electrode]

The negative electrode includes a negative substrate and a negative composite layer disposed on the negative substrate directly or with an intermediate layer interposed therebetween.

(Negative substrate)

The negative substrate has conductivity. Whether the positive substrate has "conductivity" or not is determined with the volume resistivity of $10^7$ Ω cm measured in accordance with JIS-H-0505 (1975) as a threshold. As the material for the negative substrate, a metal such as copper, nickel, stainless steel, or a nickel-plated steel, or an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. By setting the average thickness of the negative substrate to the above range, it is possible to enhance the energy density per volume of a secondary battery while increasing the strength of the negative substrate.

(Intermediate layer)

The intermediate layer is a layer disposed between the negative substrate and the negative composite layer. The intermediate layer contains a conductive agent such as carbon particles to decrease the contact resistance between the negative substrate and the negative composite layer. The configuration of the intermediate layer is not particularly limited, and includes, for example, a binder and a conductive agent.

(Negative composite layer)

The negative composite layer contains a negative active material.

The negative active material contains non-graphitizable carbon as a main component. As the negative active material contains non-graphitizable carbon as a main component, the capacity of the nonaqueous electrolyte energy storage device can be increased. The negative composite layer may contain negative active materials other than non-graphitizable carbon. The "main component in the negative active material" means a component having the highest content, and refers to a component contained at 90% by mass or more with respect to the total mass of the negative active material.

(Non-graphitizable carbon)

Non-graphitizable carbon is a carbon substance in which an average grid plane spacing d(002) of a (002) plane measured by an X-ray diffraction method in a discharge state is more than 0.36 nm and less than 0.42 nm. Non-graphitizable carbon usually refers to a material in which minute graphite crystals are arranged in a random direction, and nano-order voids are present between crystal layers. Examples of the non-graphitizable carbon include a phenol resin fired body, a furan resin fired body, and a furfuryl alcohol resin fired body.

Here, the "discharge state" refers to a state where an open circuit voltage is 1.2 V or more in a unipolar battery using a negative electrode, containing a carbon material as a negative active material, as a working electrode and metal Li as a counter electrode. Potential of the metal Li counter electrode in an open circuit state is substantially equal to the oxidation/reduction potential of Li, and thus, the open circuit voltage in the unipolar battery is substantially equal to the potential of the negative electrode containing a carbon material to the oxidation/reduction potential of Li. In other words, the fact that the open circuit voltage in a unipolar battery is 1.2 V or more means that charge support ions that can be stored and released in association with charge-discharge are sufficiently released from the carbon material that is a negative active material.

The true density A of non-graphitizable carbon is not particularly limited as long as the relation between the true density A and the amount of charge B satisfies the formula, but the lower limit thereof is preferably 1.4 g/cm$^3$, more preferably 1.45 g/cm$^3$ (for example, 1.48 g/cm$^3$). In some aspects, the true density A may be 1.5 g/cm$^3$ or more, 1.55 g/cm$^3$ or more, or 1.6 g/cm$^3$ or more. The upper limit of the true density is preferably 1.8 g/cm$^3$, more preferably 1.7 g/cm$^3$. In some aspects, the true density A may be 1.65 g/cm$^3$ or less (for example, less than 1.6g/cm$^3$), 1.58 g/cm$^3$ or less (for example, 1.55g/cm$^3$ or less), or 1.52 g/cm$^3$ or less. When the true density of non-graphitizable carbon is equal to or more than the lower limit, impurities derived from raw materials and reaction active surfaces decrease, and so the irreversible capacity becomes small. Meanwhile, when the true density of non-graphitizable carbon is equal to or less than the upper limit, the amount of charge support ions that can be stored between crystal structures increases. In other words, as the true density of non-graphitizable carbon is equal to or more than the lower limit and equal to or less than the upper limit, it is possible to increase the amount of charge support ions that can be stored while suppressing the irreversible capacity.

The true density of non-graphitizable carbon is measured by the following procedure.

The negative electrode in a full discharge state is immersed in a solvent capable of dissolving or dispersing the binder to remove the binder and the thickener, then vacuum drying is performed at 25°C for 12 hours, and then non-graphitizable carbon is taken out. Next, this non-graphitizable carbon is dried at 120°C for 2 hours, and cooled to room temperature in a desiccator. The mass (m1) of a pycnometer is accurately measured, about 3 g of this non-graphitizable carbon is put in the pycnometer, and the mass (m2) of the pycnometer is accurately measured. Next, 1-butanol is gently added to the pycnometer to a height of about 20 mm from the bottom, the pycnometer is placed in a vacuum desiccator, and the internal pressure of the desiccator is maintained at 2.0 kPa to 2.6 kPa by gradual evacuation. This pressure is maintained for 20 minutes, and after the generation of bubbles is stopped, the pycnometer is taken out from the vacuum desiccator, and 1-butanol is further added into the pycnometer. The pycnometer is immersed in a constant temperature water bath at 30 + 0.5°C for 30 minutes, and the amount of 1-butanol is adjusted so that the level of 1-butanol fits the marked line on the pycnometer. The pycnometer is taken out, the outside thereof is thoroughly wiped, and the mass thereof is accurately measured. The pycnometer is immersed in a constant temperature water bath again for 15 minutes, and the amount of 1-butanol is adjusted so that the level of 1-butanol fits the marked line on the pycnometer. The pycnometer is taken out, the outside thereof is thoroughly wiped, and the mass thereof is measured. This step is repeated three times, and the average value (m4) of the respective masses when the step is repeated three times is determined. Next, a step of filling the same pycnometer only with 1-butanol, immersing the pycnometer in a constant temperature water bath in the same manner as the above for 15 minutes, adjusting the amount of 1-butanol so that the level of 1-butanol fits the marked line on the pycnometer, and then measuring the mass of the pycnometer is repeated four times, and the average value (m3) of the respective masses when the step is repeated four times is determined. A step of putting water degassed immediately before use in the same pycnometer, immersing the pycnometer in a constant temperature water bath in the same manner as the above for 15 minutes, adjusting the amount of water so that the level of water fits the marked line on the pycnometer, and then measuring the mass of the pycnometer is repeated four times, and the average value (m5) of the respective masses at that time is determined. The true density A is calculated by the following Equation 3. In the following Equation 3, d is the specific gravity of water at 30°C, and d = 0.9956 is set.

$$A = (m2 - m1)/(m2 - m1 - (m4 - m3)) \times ((m3 - m1)/(m5 - m1)) \times d \quad ... 3$$

The lower limit of the content of non-graphitizable carbon with respect to the total mass of the negative active material is preferably 90% by mass. By setting the content of non-graphitizable carbon to be equal to or more than the lower limit, the capacity of the nonaqueous electrolyte energy storage device can be further increased. Meanwhile, the upper limit of the content of non-graphitizable carbon with respect to the total mass of the negative active material may be, for example, 100% by mass.

(Other negative active materials)

Examples of other negative active materials that may be contained in addition to non-graphitizable carbon include graphitizable carbon, graphite, metals such as Si and Sn, oxides of these metals, or composites of these metals and carbon materials.

The content of the negative active material in the negative composite layer is not particularly limited, but the lower limit thereof is preferably 50% by mass, more preferably 80% by mass, still more preferably 90% by mass. Meanwhile, the upper limit of the content is preferably 99% by mass, more preferably 98 mass.

(Binder)

The negative composite layer contains a nonaqueous binder as a binder. As the negative composite layer contains a nonaqueous binder as a binder, peeling off of the negative composite layer can be suppressed when diethyl carbonate is used as a nonaqueous solvent as well. The nonaqueous binder is not particularly limited as long as it is a binder that is dispersed or dissolved in an organic solvent. For example, the nonaqueous binder is preferably one that dissolves in 100 parts by mass of water by less than 1 part by mass at 20°C. Examples of the binder that is dispersed or dissolved in an organic solvent include fluororesins (polytetrafluoroethylene (PTFE), polyvinylidene fluoride (PVDF), a copolymer of vinylidene fluoride and hexafluoropropylene, and the like), polyethylene, polypropylene, polyimide, copolymers of ethylene and vinyl alcohol, polyacrylonitrile, polyphosphazene, polysiloxane, polyvinyl acetate, polymethyl methacrylate, polystyrene, polycarbonate, polyamide, polyamideimide, crosslinked polymers of cellulose and chitosan pyrrolidone carboxylate, and derivatives of chitin or chitosan, and fluororesins are preferable, and PVDF is more preferable. One or two or more of the nonaqueous binders can be used.

The binder content in the negative composite layer is not particularly limited. The lower limit of the binder content is preferably 1% by mass, more preferably 2% by mass. In some aspects, the binder content may be, for example, 3% by mass or more, or typically 4% by mass or more (for example, 5% by mass or more). Meanwhile, the upper limit of the binder content is preferably 10% by mass, more preferably 7% by mass. By setting the binder content to be equal to or more than the lower limit and equal to or less than the upper limit, it is possible to achieve both high energy density and high power of the negative composite layer and manufacturability.

(Other optional components)

The negative composite layer contains optional components such as a conductive agent and a filler, if necessary.

The non-graphitizable carbon also has conductivity, but the conductive agent is not particularly limited as long as it is a conductive material. Examples of such a conductive agent include graphite, carbonaceous materials other than non-graphitizable carbon, metals, and conductive ceramics. Examples of the carbonaceous materials other than non-graphitizable carbon include non-graphitizing carbon other than non-graphitizable carbon and graphene-based carbon. Examples of the non-graphitizing carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material carbon black combined with a CNT may be used. Among these materials, carbon black is preferable from the viewpoints of electron conductivity and coatability, and in particular, acetylene black is preferable.

In a case where a conductive agent is used in the negative composite layer, the proportion of the conductive agent to the entire negative composite layer can be set to about 10% by mass or less, and is preferably set to usually about 8.0% by mass or less (for example, 3.0% by mass or less). The technique disclosed herein can be preferably carried out in an aspect in which the negative composite layer does not contain the conductive agent.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

In a case where a filler is used in the negative composite layer, the ratio of the filler in the entire negative composite layer can be set to about 8.0% by mass or less, and is preferably usually about 5.0% by mass or less (for example, 1.0% by mass or less).

The negative composite layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Ta, Hf, Nb, or W as a component other than the negative active material, the conductive agent, the binder, and the filler.

In the nonaqueous electrolyte energy storage device, when the true density of non-graphitizable carbon is A [g/cm$^3$], the amount of charge B [mAh/g] of the negative electrode in a full charge state satisfies the following Formula 1. The amount of charge B [mAh/g] preferably satisfies the following Formula 2.

$$-600 \times A + 1300 \leq B \leq -830 \times A + 1800 \quad ... \, 1$$

$$-600 \times A + 1400 \leq B \leq -830 \times A + 1800 \quad ... \, 2$$

In the nonaqueous electrolyte energy storage device, when the true density of non-graphitizable carbon is A [g/cm$^3$], as the amount of charge B [mAh/g] of the negative electrode in a full charge state is -830 $\times$ A + 1800 or less, the amount of charge B has an appropriate size, the depth of charge of the negative electrode does not increase too much, and it is thus possible to suppress occurrence of the deposition of charge support metals. When the amount of charge B of the negative electrode in a full charge state is in a range of -600 $\times$ A + 1300 or more, as diethyl carbonate, which is less likely to generate gas, is used as a nonaqueous solvent contained in the nonaqueous electrolyte and a nonaqueous binder is used as a binder for the negative composite layer, it is possible to effectively suppress deposition of the charge support metal while suppressing peeling off of the negative composite layer. Hence, the nonaqueous electrolyte energy storage device is excellent in the effect of suppressing the deposition of charge support metals in a case where the depth of charge of the negative electrode is increased by using non-graphitizable carbon as a negative active material. As the amount of charge B of the negative electrode in a full charge state is -600 $\times$ A + 1300 or more, the capacity retention ratio of the nonaqueous electrolyte energy storage device can be further improved.

The amount of charge B of the negative electrode is measured by the following procedure.

(1) The target nonaqueous electrolyte energy storage device is discharged to the end stage of discharge (low charge depth region) and disassembled in a glove box of which the atmosphere is controlled to have an oxygen concentration of 5 ppm or less.

(2) In the glove box, the positive electrode and the negative electrode are taken out and cut into predetermined sizes to assemble a small cell.

(3) The small cell is subjected to constant current charge at a current of (1/3) C to the rated upper limit voltage or end-of-charge voltage of the nonaqueous electrolyte energy storage device and then constant voltage charge until the current reaches 0.01 C at the rated upper limit voltage or end-of-charge voltage so as to be in a full charge state. Next, constant current discharge is performed at a current of (1/3) C to the lower limit voltage when the rated capacity is acquired in the nonaqueous electrolyte energy storage device, and then constant voltage discharge is performed at the lower limit voltage until the current reaches 0.01 C.

(4) In a glove box of which the atmosphere is controlled to have an oxygen concentration of 5 ppm or less, the small cell is disassembled, the negative electrode is taken out, and the small cell is reassembled into a unipolar battery in which lithium metal is disposed as the counter electrode.

(5) Additional constant current discharge is performed at a current of 0.01 C until the voltage of the unipolar battery reaches 2.0 V, and the negative electrode is adjusted to a full discharge state.

(6) The sum of discharge capacity in (3) and (5) above is divided by the negative electrode mass of the positive-negative electrode facing portion in the small cell to acquire the amount of charge B of the negative electrode.

The amount of charge B of the negative electrode in a full charge state can be adjusted, for example, by changing the ratio N/P of the mass N of the negative active material per unit area in the negative composite layer to the mass P of the positive active material per unit area in the positive composite layer.

[Positive electrode]

The positive electrode includes a positive substrate and a positive composite layer disposed on the positive substrate directly or with an intermediate layer interposed therebetween. The configuration of the intermediate layer is not particularly limited, and for example, can be selected from the configurations exemplified for the negative electrode.

(Positive substrate)

The positive substrate has conductivity. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. When the average thickness of the positive substrate is within the above-described range, it is possible to enhance the energy density per volume of a secondary battery while increasing the strength of the positive substrate.

(Positive composite layer)

The positive composite layer contains a positive active material. The positive composite layer contains optional components such as a conductive agent, a binder, a thickener, and a filler if necessary.

The positive active material can be appropriately selected from known positive active materials. As the positive active material for lithium ion secondary battery, a material capable of storing and releasing lithium ions is usually used. Examples of the positive active material include lithium-transition metal composite oxides that have an $\alpha$-NaFeO$_2$-type crystal structure, lithium-transition metal composite oxides that have a spinel-type crystal structure, polyanion compounds, chalcogenides, and sulfur. Lithium-transition metal composite oxides that have an $\alpha$-NaFeO$_2$-type crystal structure are preferable. By using lithium-transition metal composite oxides as a positive active material, the energy density of the nonaqueous electrolyte energy storage device can be increased. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < \gamma < 1$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < \gamma < 1$), Li[Li$_x$Ni$_\gamma$Mn$_\beta$Co$_{(1-x-\gamma-\beta)}$]O$_2$ ($0 \leq x < 0.5$, $0 < y$, $0 < \beta$, $0.5 < \gamma + \beta < 1$), and Li[Li$_x$Ni$_\gamma$Co$_\beta$Al$_{(1-x-\gamma-\beta)}$]O$_2$ ($0 \leq x < 0.5$, $0 < y$, $0 < \beta$, $0.5 < y + \beta < 1$). Examples of the lithium-transition metal composite oxides that have a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$,

$Li_2MnSiO_4$, and $Li_2CoPO_4F$. Examples of the chalcogenides include titanium disulfide, molybdenum disulfide, and molybdenum dioxide. Some of atoms or polyanions in these materials may be substituted with atoms or anion species composed of other elements. The surfaces of these materials may be coated with other materials. In the positive composite layer, one of these materials may be used singly or two or more thereof may be used in mixture.

The positive active material is usually particles (powder). The average particle size of the positive active material is preferably 0.1 pm or more and 20 pm or less, for example. By setting the average particle size of the positive active material to be equal to or more than the lower limit mentioned above, the positive active material is easily produced or handled. By setting the average particle size of the positive active material to be equal to or less than the upper limit, the electron conductivity of the positive composite layer is improved. In the case of using a composite of the positive active material and another material, the average particle size of the composite is regarded as the average particle size of the positive active material. The term "average particle size" means a value at which the volume-based cumulative size distribution calculated in conformity with JIS-Z-8819-2 (2001) is 50% based on the particle size distribution measured for a diluted solution obtained by diluting particles with a solvent by a laser diffraction/scattering method in conformity with JIS-Z-8825 (2013).

A crusher, a classifier, and the like are used to obtain a powder having a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in the coexistence of water or an organic solvent such as hexane can also be used. As a classification method, a sieve or a wind force classifier or the like is used based on the necessity both in dry manner and in wet manner.

The content of the positive active material in the positive composite layer is preferably 50% by mass or more and 99% by mass or less, more preferably 70% by mass or more and 98% by mass or less, still more preferably 80% by mass or more and 95% by mass or less. By setting the content of the positive active material to the above range, it is possible to achieve both high energy density of the positive composite layer and manufacturability.

The conductive agent is not particularly limited as long as it is a conductive material. Such a conductive agent can be selected from the materials exemplified for the negative electrode. In the case of using a conductive agent, the proportion of the conductive agent to the entire positive composite layer can be set to about 1.0% by mass to 20% by mass, and is preferably set to usually about 2.0% by mass to 15% by mass (for example, 3.0% by mass to 6.0% by mass).

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The binder content in the positive composite layer is preferably 1% by mass or more and 10% by mass or less, more preferably 3% by mass or more and 9% by mass or less. By setting the binder content to the above range, the positive active material can be stably held.

Examples of the thickener include polysaccharide polymers such as carboxymethylcellulose (CMC) and methylcellulose. In a case where the thickener has a functional group that is reactive with lithium and the like, the functional group may be deactivated by methylation or the like in advance.

The filler can be selected from the materials exemplified for the negative electrode. In the case of using a filler, the proportion of the filler to the entire positive composite layer can be set to about 8.0% by mass or less, and is preferably set to usually about 5.0% by mass or less (for example, 1.0% by mass or less).

The positive composite layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W as a component other than the positive active material, the conductive agent, the binder, the thickener, and the filler.

[Nonaqueous electrolyte]

The nonaqueous electrolyte contains a nonaqueous solvent and an electrolyte salt dissolved in the nonaqueous solvent. The nonaqueous solvent contains diethyl carbonate. The nonaqueous solvent may contain other nonaqueous solvents in addition to diethyl carbonate.

The diethyl carbonate content P1 in the nonaqueous solvent is not particularly limited as long as it exceeds 0. The diethyl carbonate content P1 is preferably 10% by volume or more, more preferably 30% by volume, still more preferably 50% by volume or more from the viewpoint of suppressing deposition of the charge support metal. In a preferable aspect, the content P1 is more than 60% by volume (for example, 65% by volume or more, typically 70% by volume or more). The upper limit of the diethyl carbonate content P1 is preferably 90% by volume, more preferably 80% by volume (for example, 75% by volume). When the diethyl carbonate content P1 is equal to or more than the lower limit or equal to or less than the upper limit, the effects described above (for example, the effect of suppressing deposition of the charge support metal while suppressing peeling off of the negative composite layer) can be exerted more favorably.

As the other nonaqueous solvent, it is possible to use a known nonaqueous solvent usually used as a nonaqueous solvent of a general nonaqueous electrolyte for an energy storage device. Examples of the other nonaqueous solvent include cyclic carbonates, chain carbonates other than diethyl carbonate, esters, ethers, amides, sulfones, lactones, and nitriles. As the other nonaqueous solvent, it is preferable to use a cyclic carbonate from the viewpoint of improving durability.

As the cyclic carbonate, a cyclic carbonate having 3 or more and 20 or less (for example, 3 or more and 10 or less, preferably 3 or more and 8 or less, more preferably 3 or more and 6 or less) carbon atoms may be preferably adopted. Examples of the cyclic carbonate having 3 or more and 20 or less carbon atoms include ethylene carbonate (EC; also called 1,3-dioxolan-2-one), propylene carbonate (PC; also called 4-methyl-1,3-dioxolan-2-one), butylene carbonate (BC; also called 4,5-dimethyl-1,3-dioxolan-2-one), pentylene carbonate, vinylene carbonate (VC), vinyl ethylene carbonate (VEC), styrene carbonate, catechol carbonate, 1-phenylvinylene carbonate, 1,2-diphenylvinylene carbonate, or derivatives thereof. A fluorinated cyclic carbonate obtained by substituting some or all of the hydrogen atoms in the cyclic carbonate with a fluorine atom may also be used. Examples of the fluorinated cyclic carbonate include fluoroethylene carbonate (FEC) and difluoroethylene carbonate (DFEC). One of these cyclic carbonates may be used singly, or two or more thereof may be used in combination. Among these, cyclic carbonates having 3 or more and 6 or less carbon atoms (more preferably 4 or more and 6 or less carbon atoms) are preferable, and PC is particularly preferable. By using these cyclic carbonates and diethyl carbonate in combination, the effects described above can be exerted more favorably.

The cyclic carbonate content P2 in the nonaqueous solvent is not particularly limited, but the upper limit thereof is 50% by volume, preferably 40% by volume (for example, 30% by volume). Meanwhile, the lower limit of the content P2 is 10% by volume, preferably 20% by volume (for example, 25% by volume). By setting the cyclic carbonate content P2 to be equal to or more than the lower limit or equal to or less than the upper limit, the performance improving effect acquired by using a cyclic carbonate in combination with diethyl carbonate can be enhanced.

From the viewpoint of exerting the effect acquired by using diethyl carbonate and a cyclic carbonate concurrently, the diethyl carbonate content P1 is higher than the cyclic carbonate content P2. In other words, it may be P1 > P2. The relation between P1 and P2 preferably satisfies $1 < (P1/P2) \leq 5.0$. In the technique disclosed herein, for example, the relation between P1 and P2 is preferably $1.2 \leq (P1/P2) \leq 4$, more preferably $1.5 \leq (P1/P2) \leq 3.5$, still more preferably $2 < (P1/P2) \leq 3$.

As the chain carbonate other than diethyl carbonate, a chain carbonate having 3 or more and 15 or less (for example, 3 or more and 13 or less, preferably 3 or more and 9 or less, more preferably 3 or more and 7 or less) carbon atoms may be preferably adopted. Examples of the chain carbonate having 3 or more and 15 or less include dimethyl carbonate (DMC), ethyl methyl carbonate (EMC), and diphenyl carbonate. A fluorinated chain carbonate obtained by substituting some or all of the hydrogen atoms in the chain carbonate with a fluorine atom may also be used. In the case of containing a chain carbonate other than diethyl carbonate, the proportion of diethyl carbonate to the total amount (100% by volume) of chain carbonates contained in the nonaqueous solvent is suitably 50% by volume or more, preferably 75% by volume or more, more preferably 85% by volume or more, still more preferably 90% by volume or more. Among these, it is preferable that 100% by volume of the chain carbonate contained in the nonaqueous solvent is diethyl carbonate. By using a chain carbonate composed essentially of diethyl carbonate in this way, the effects described above (for example, the effect of suppressing deposition of the charge support metal) can be exerted more favorably.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as $LiPFs$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these, inorganic lithium salts are preferable, and $LiPF_6$ is more preferable.

The content of the electrolyte salt in the nonaqueous electrolyte is, at 20°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. By setting the content of the electrolyte salt to the above range, the ionic conductivity of the nonaqueous electrolyte can be increased.

The nonaqueous electrolyte may contain an additive in addition to the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be used in mixture.

The content of the additive contained in the nonaqueous electrolyte is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less with respect to the total mass of the nonaqueous electrolyte. By setting the content of the additive to the above range, it is possible to improve the capacity retention performance or cycle performance after high-temperature storage, or to further improve the safety.

[Separator]

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, a simple substance or a complex of these substances may be used singly, or two or more thereof may be used in mixture. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength, and is preferably 20% by volume or more from the viewpoint of discharge performance. The "porosity" herein is a volume-based value, and means a value measured using a mercury porosimeter.

As the separator, a polymer gel containing a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. When the polymer gel is used, the effect of suppressing liquid leakage is acquired. As the separator, the polymer gel may be used concurrently with a porous resin film, a nonwoven fabric, or the like as described above.

[Specific configuration of nonaqueous electrolyte energy storage device]

The shape of the nonaqueous electrolyte energy storage device according to the present embodiment is not particularly limited, and examples thereof include cylindrical batteries, prismatic batteries, flat batteries, coin batteries and button batteries.

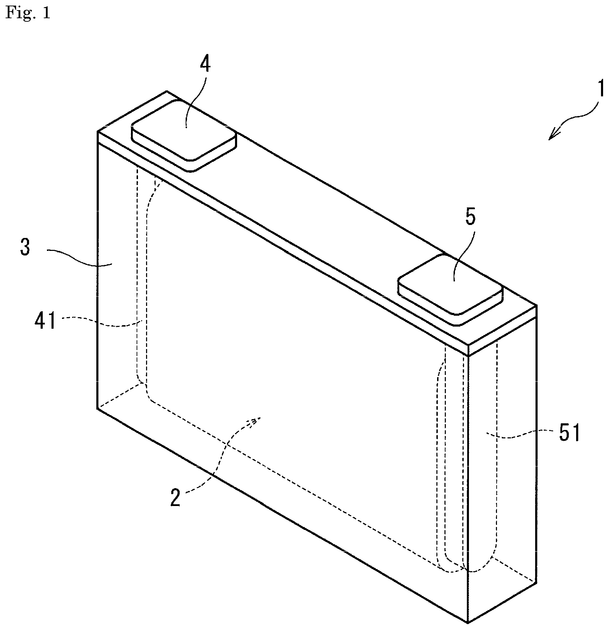

Fig. 1 illustrates a nonaqueous electrolyte energy storage device 1 as an example of prismatic batteries. Fig. 1 is a view illustrating the inside of a case in a perspective manner. A wound electrode assembly 2 including a positive electrode and a negative electrode wound with a separator interposed therebetween is housed in a prismatic case 3. In the illustrated example, the electrode assembly 2 is a flat wound electrode assembly. The gas generated by decomposition of the nonaqueous electrolyte is more likely to accumulate and the charge support metal is more likely to be deposited in the wound electrode assembly compared to a stacked electrode assembly. Therefore, the effects acquired by of applying this aspect can be exerted more effectively. The positive electrode is electrically connected to a positive electrode terminal 4 via a positive current collector 41. The negative electrode is electrically connected to a negative electrode terminal 5 via a negative current collector 51.

[Configuration of nonaqueous electrolyte energy storage apparatus]

The nonaqueous electrolyte energy storage device of the present embodiment can be mounted as an energy storage apparatus configured by assembling a plurality of nonaqueous electrolyte energy storage devices 1 on a power source for motor vehicles such as electric vehicles (EV), hybrid vehicles (HEV), and plug-in hybrid vehicles (PHEV), a power source for electronic equipment such as personal computers and communication terminals, a power source for power storage, or the like. In this case, the technique of the present invention may be applied to at least one nonaqueous electrolyte energy storage device included in the energy storage apparatus.

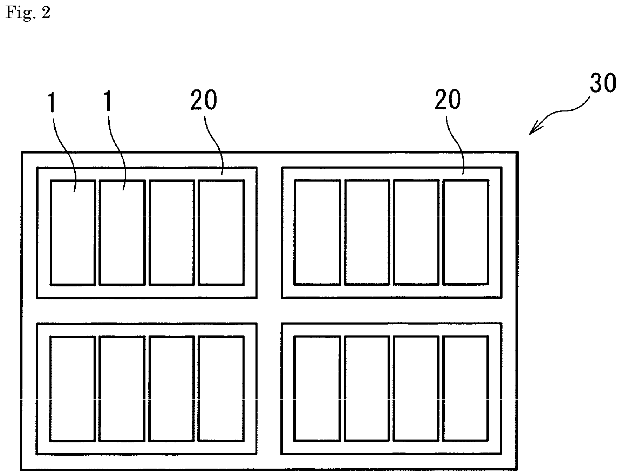

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

[Method for manufacturing nonaqueous electrolyte energy storage device]

A method for manufacturing the nonaqueous electrolyte energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.
Housing the nonaqueous electrolyte in the case can be appropriately selected from known methods. For example, the nonaqueous electrolyte may be injected from an injection port formed in the case, and then the injection port may be sealed. The details of each element configuring the nonaqueous electrolyte energy storage device obtained by the manufacturing method are as described above.
According to the nonaqueous electrolyte energy storage device, the effect of suppressing the deposition of charge support metals is excellent in a case where the depth of charge of the negative electrode is increased by using non-graphitizable carbon as a negative active material.

[Other embodiments]

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. A well-known technique can be added to the configuration according to one embodiment.
In the embodiment, a case where the nonaqueous electrolyte energy storage device is used as a nonaqueous electrolyte secondary battery (for example, lithium ion secondary battery) that is chargeable and dischargeable has been described, but the type, shape, dimensions, capacity, and the like of the nonaqueous electrolyte energy storage device are arbitrary. The present invention can also be applied to capacitors such as various secondary batteries, electric double-layer capacitors, or lithium ion capacitors.
In the embodiment, an electrode assembly in which a positive electrode and a negative electrode are stacked with a separator interposed therebetween has been described, but the electrode assembly may not include a separator. For example, the positive electrode and the negative electrode may be brought into direct contact with each other in a state where a layer not exhibiting conductivity is formed on the composite layer of the positive electrode or negative electrode.

EXAMPLES

Hereinafter, the present invention will be described in more detail with reference to Examples, but the present invention is not limited to the following Examples.

[Examples 1 to 9 and Comparative Examples 1 to 31]

(Fabrication of negative electrode)

In Example 1 to Example 9, Comparative Example 1 to Comparative Example 3, Comparative Example 6 to Comparative Example 11, Comparative Example 14, Comparative Example 15, Comparative Example 18, Comparative Example 21, Comparative Example 22, Comparative Example 25, Comparative Example 28 and Comparative Example 29, a negative composite paste was prepared using non-graphitizable carbon as a negative active material, polyvinylidene fluoride (PVDF) as a nonaqueous binder, and N-methylpyrrolidone (NMP) as a nonaqueous dispersion medium. The mass ratio of the negative active material to the binder was set to 95 : 5 in terms of solid components. In other Comparative Examples, a negative composite paste was prepared using non-graphitizable carbon as a negative active material, styrene-butadiene rubber (SBR) as an aqueous binder, carboxymethyl cellulose (CMC) as a thickener, and water as a dispersion medium. The mass ratio of non-graphitizable to styrene-butadiene rubber to carboxymethyl cellulose was set to 97.4 : 2 : 0.6 in terms of solid components.

The negative composite paste was prepared by performing mixing using a multi-blender mill. This negative composite paste was applied to both surfaces of a copper foil as a negative substrate. Next, drying was performed, thereby fabricating a negative composite layer. After the drying, the negative composite layer was roll-pressed so as to have a predetermined packing density, thereby obtaining a negative electrode.

(Fabrication of positive electrode)

A positive composite paste was prepared using lithium-nickel-cobalt-manganese composite oxide as a positive active material, acetylene black (AB) as a conductive agent, polyvinylidene fluoride (PVDF) as a binder, and N-methylpyrrolidone (NMP) as a nonaqueous dispersion medium. The mass ratio of the positive active material to the binder to the conductive agent was set to 94.5 : 4.0 : 1.5 in terms of solid components. This positive composite paste was applied to both surfaces of an aluminum foil as a positive substrate. Next, drying was performed, thereby fabricating a positive composite layer. After the drying, the positive composite layer was roll-pressed so as to have a predetermined packing density, thereby obtaining a positive electrode. Here, the molar ratio of nickel to cobalt to manganese (Ni : Co : Mn ratio) in the lithium-nickel-cobalt-manganese composite oxide as a positive active material was set to 6 : 2 : 2.

(Nonaqueous electrolyte)

As presented in Table 1, as a nonaqueous solvent in the nonaqueous electrolyte of Examples 1 to 9 and Comparative Example 1, Comparative Example 4, Comparative Example 7, Comparative Example 18, Comparative Example 12, Comparative Example 15, Comparative Example 16, Comparative Example 19, Comparative Example 22, Comparative Example 23, Comparative Example 26, Comparative Example 29 and Comparative Example 30, a mixture of propylene carbonate (PC) and diethyl carbonate (DEC) at a volume ratio of 30 : 70 was used. As a nonaqueous solvent of the nonaqueous electrolytes in other Comparative Examples, a mixture of propylene carbonate and ethyl methyl carbonate (EMC) at a volume ratio of 30 : 70 was used. In all Examples and Comparative Examples, LiPFs was used as an electrolyte salt, and the nonaqueous electrolyte was prepared by dissolving LiPFs in the nonaqueous solvent at a concentration of 1.2 mol/dm$^3$.

(Separator)

As a separator, a polyethylene microporous membrane having a thickness of 14 pm was used.

(Nonaqueous electrolyte energy storage device)

The positive electrode, the negative electrode, and the separator were stacked to fabricate an electrode assembly. Thereafter, the electrode assembly was enclosed in a case. Next, the case was welded to the lid plate. Then, the nonaqueous electrolyte was injected into the case, and the case opening was sealed. In this manner, nonaqueous electrolyte energy storage devices according to Examples 1 to 9 and Comparative Examples 1 to 31 were obtained.

[Evaluation]

(True density of non-graphitizable carbon)

The true density of non-graphitizable carbon was measured by the above-described method.

(Amount of charge of negative electrode)

The amount of charge of the negative electrode was measured by the above-described method.

(Capacity retention ratio after charge-discharge cycle)

(1) Initial discharge capacity checking test

Each of the nonaqueous electrolyte energy storage devices was subjected to constant current constant voltage (CCCV) charge until the charge current reached 0.01 C or less under the conditions of a charge current of (1/3) C and an end-of-charge voltage of 4.32 V in a thermostatic bath at 25°C, followed by a rest period of 20 minutes. Thereafter, constant current (CC) discharge was performed at a discharge current of 1 C and an end-of-discharge voltage of 2.4 V. The discharge capacity at this time was defined as the "initial discharge capacity".

(2) Capacity retention ratio

Each of the nonaqueous electrolyte energy storage devices after the measurement of "initial discharge capacity" were subjected to constant current constant voltage (CCCV) charge until the charge current reached 0.01 C or less under the conditions of a charge current of (1/3) C and an end-of-charge voltage of 4.32 V in a thermostatic bath at 45°C, followed by a rest period of 10 minutes. Thereafter, constant current (CC) discharge was performed at a discharge current of 1 C and an end-of-discharge voltage of 2.4 V, followed by a rest period of 10 minutes. This charge-discharge cycle was performed 500 cycles. After 500 cycles, the discharge capacity was measured under the same conditions as those in the initial discharge capacity checking test, and the discharge capacity at this time was defined as the "discharge capacity after 500 cycles". The "discharge capacity after 500 cycles" with respect to the "initial discharge capacity" was defined as the capacity retention ratio after charge-discharge cycles.

(Evaluation of deposition of metal lithium)

The evaluation of deposition of metal lithium was performed by the following procedure.
The nonaqueous electrolyte energy storage devices after the initial capacity checking test were each disassembled in a discharge state to take out the negative electrode, the negative electrode was washed with dimethyl carbonate (DMC), and the surface of the negative electrode was then visually observed. In a case where a white precipitate was present on the surface of the negative electrode, it was judged that metal lithium was deposited.

(Evaluation of peeling off of negative composite layer)

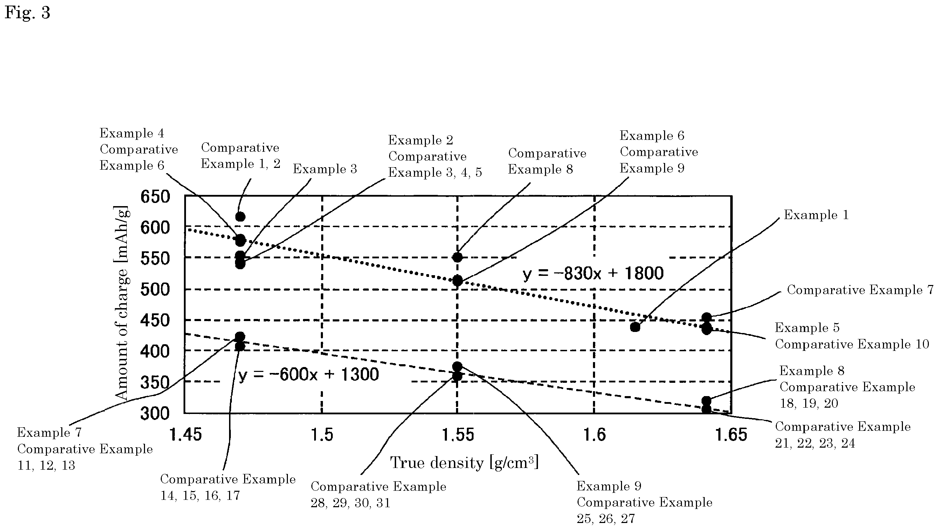

Evaluation of peeling off of the negative composite layer was performed by the following procedure.
The nonaqueous electrolyte energy storage devices after the initial capacity checking test were each disassembled in a discharge state, and it was judged that the negative composite layer was peeled off in a case where even a part of the negative composite layer in the region facing the positive electrode was peeled off when the nonaqueous electrolyte energy storage device was disassembled and the negative electrode was washed using dimethyl carbonate (DMC).
Table 1 below presents the binder material for the negative composite layer, the true density of non-graphitizable carbon, the content of diethyl carbonate, the amount of charge of the negative electrode, the capacity retention ratio after charge-discharge cycles, the evaluation results of deposition of metal lithium, and the evaluation results of peeling off of the negative composite layers in Examples 1 to 9 and Comparative Examples 1 to 31. Fig. 3 illustrates the relation between the true density of non-graphitizable carbon in the negative active material and the amount of charge of the negative electrode in a full charge state in Examples 1 to 9 and Comparative Examples 1 to 31.

[Table 1]

| Test Example No. | Negative composite layer binder | Non-graphitizable carbon true density [g/cm³] | DEC content in nonaqueous solvent [% by volume] | Upper limit amount of charge y = -830A + 1800 [mAh/g] | Amount of charge [mAh/g] | Lower limit amount of charge y = -600A + 1300 [mAh/g] | Amount of charge y = -830A + 1800 or less y = -600A + 1300 or more Judgment | Capacity retention ratio after 500 cycles [%] | Evaluation of deposition of metal lithium | Evaluation of peeling off of negative composite layer |
|---|---|---|---|---|---|---|---|---|---|---|
| Example 1 | PVdF | 1.615 | 70 | 460 | 438 | 331 | Meeting | 90 | No deposition | Nil |
| Example 2 | PVdF | 1.470 | 70 | 580 | 541 | 418 | Meeting | 89 | No deposition | Nil |
| Example 3 | PVdF | 1.470 | 70 | 580 | 553 | 418 | Meeting | 90 | No deposition | Nil |
| Example 4 | PVdF | 1.470 | 70 | 580 | 576 | 418 | Meeting | 90 | No deposition | Nil |
| Example 5 | PVdF | 1.641 | 70 | 438 | 433 | 315 | Meeting | 90 | No deposition | Nil |
| Example 6 | PVdF | 1.550 | 70 | 514 | 514 | 370 | Meeting | 90 | No deposition | Nil |
| Comparative Example 1 | PVdF | 1.470 | 70 | 580 | 616 | 418 | More than y = -830A + 1800 | Unmeasurable | Deposition | Nil |
| Comparative Example 2 | PVdF | 1.470 | 0 | 580 | 616 | 418 | More than y = -830A + 1800 | Unmeasurable | Deposition | Nil |
| Comparative Example 3 | PVdF | 1.470 | 0 | 580 | 541 | 418 | Meeting | Unmeasurable | Deposition | Nil |
| Comparative Example 4 | SBR, CMC | 1.470 | 70 | 580 | 539 | 418 | Meeting | 86 | No deposition | Peeling off |
| Comparative Example 5 | SBR, CMC | 1.470 | 0 | 580 | 539 | 418 | Meeting | Unmeasurable | Deposition | Nil |
| Comparative Example 6 | PVdF | 1.470 | 0 | 580 | 576 | 418 | Meeting | Unmeasurable | Deposition | Nil |

| Test Example No. | Negative composite layer binder | Non-graphitizable carbon true density [g/cm$^3$] | DEC content in nonaqueous solvent [% by volume] | Upper limit amount of charge y = -830A + 1800 [mAh/g] | Amount of charge [mAh/g] | Lower limit amount of charge y = -600A + 1300 [mAh/g] | Amount of charge y = -830A + 1800 or less y = -600A + 1300 or more Judgment | Capacity retention ratio after 500 cycles [%] | Evaluation of deposition of metal lithium | Evaluation of peeling off of negative composite layer |
|---|---|---|---|---|---|---|---|---|---|---|
| Comparative Example 7 | PVdF | 1.641 | 70 | 438 | 455 | 315 | More than y = -830A + 1800 | Unmeasurable | Deposition | Nil |
| Comparative Example 8 | PVdF | 1.550 | 70 | 514 | 550 | 370 | More than y = -830A + 1800 | Unmeasurable | Deposition | Nil |
| Comparative Example 9 | PVdF | 1.550 | 0 | 514 | 514 | 370 | Meeting | Unmeasurable | Deposition | Nil |
| Comparative Example 10 | PVdF | 1.641 | 0 | 438 | 433 | 315 | Meeting | Unmeasurable | Deposition | Nil |
| Comparative Example 11 | PVdF | 1.470 | 0 | 580 | 423 | 418 | Meeting | 82 | Deposition | Nil |
| Example 7 | PVdF | 1.470 | 70 | 580 | 423 | 418 | Meeting | 87 | No deposition | Nil |
| Comparative Example 12 | SBR, CMC | 1.470 | 70 | 580 | 423 | 418 | Meeting | Unmeasurable | No deposition | Peeling off |
| Comparative Example 13 | SBR, CMC | 1.470 | 0 | 580 | 423 | 418 | Meeting | Unmeasurable | Deposition | Nil |
| Comparative Example 14 | PVdF | 1.470 | 0 | 580 | 406 | 418 | Less than y = -600A + 1300 | 86 | No deposition | Nil |
| Comparative Example 15 | PVdF | 1.470 | 70 | 580 | 406 | 418 | Less than y = -600A + 1300 | 86 | No deposition | Nil |
| Comparative Example 16 | SBR, CMC | 1.470 | 70 | 580 | 406 | 418 | Less than y = -600A + 1300 | Unmeasurable | No deposition | Nil |
| Comparative Example 17 | SBR, CMC | 1.470 | 0 | 580 | 406 | 418 | Less than y = -600A + 1300 | Unmeasurable | No deposition | Nil |

EP 4 280 330 A1

| Test Example No. | Negative composite layer binder | Non-graphitizable carbon true density [g/cm³] | DEC content in nonaqueous solvent [% by volume] | Upper limit amount of charge y = -830A + 1800 [mAh/g] | Amount of charge [mAh/g] | Lower limit amount of charge y = -600A + 1300 [mAh/g] | Amount of charge y = -830A + 1800 or less y = -600A + 1300 or more Judgment | Capacity retention ratio after 500 cycles [%] | Evaluation of deposition of metal lithium | Evaluation of peeling off of negative composite layer |
|---|---|---|---|---|---|---|---|---|---|---|
| Comparative Example 18 | PVdF | 1.641 | 0 | 438 | 320 | 315 | Meeting | 81 | Deposition | Nil |
| Example 8 | PVdF | 1.641 | 70 | 438 | 320 | 315 | Meeting | 87 | No deposition | Nil |
| Comparative Example 19 | SBR, CMC | 1.641 | 70 | 438 | 320 | 315 | Meeting | Unmeasurable | No deposition | Peeling off |
| Comparative Example 20 | SBR, CMC | 1.641 | 0 | 438 | 320 | 315 | Meeting | Unmeasurable | Deposition | Nil |
| Comparative Example 21 | PVdF | 1.641 | 0 | 438 | 307 | 315 | Less than y = -600A + 1300 | 86 | No deposition | Nil |
| Comparative Example 22 | PVdF | 1.641 | 70 | 438 | 307 | 315 | Less than y = -600A + 1300 | 86 | No deposition | Nil |
| Comparative Example 23 | SBR, CMC | 1.641 | 70 | 438 | 307 | 315 | Less than y = -600A + 1300 | Unmeasurable | No deposition | Nil |
| Comparative Example 24 | SBR, CMC | 1.641 | 0 | 438 | 307 | 315 | Less than y = -600A + 1300 | Unmeasurable | No deposition | Nil |
| Comparative Example 25 | PVdF | 1.550 | 0 | 514 | 375 | 370 | Meeting | 81 | Deposition | Nil |
| Example 9 | PVdF | 1.550 | 70 | 514 | 375 | 370 | Meeting | 87 | No deposition | Nil |
| Comparative Example 26 | SBR, CMC | 1.550 | 70 | 514 | 375 | 370 | Meeting | Unmeasurable | No deposition | Peeling off |
| Comparative Example 27 | SBR, CMC | 1.550 | 0 | 514 | 375 | 370 | Meeting | Unmeasurable | Deposition | Nil |

EP 4 280 330 A1

| Test Example No. | Negative composite layer binder | Non-graphitizable carbon true density [g/cm$^3$] | DEC content in nonaqueous solvent [% by volume] | Upper limit amount of charge y = -830A + 1800 [mAh/g] | Amount of charge [mAh/g] | Lower limit amount of charge y = -600A + 1300 [mAh/g] | Amount of charge y = -830A + 1800 or less y = -600A + 1300 or more Judgment | Capacity retention ratio after 500 cycles [%] | Evaluation of deposition of metal lithium | Evaluation of peeling off of negative composite layer |
|---|---|---|---|---|---|---|---|---|---|---|
| Comparative Example 28 | PVdF | 1.550 | 0 | 514 | 359 | 370 | Less than y = -600A + 1300 | 86 | No deposition | Nil |
| Comparative Example 29 | PVdF | 1.550 | 70 | 514 | 359 | 370 | Less than y = -600A + 1300 | 86 | No deposition | Nil |
| Comparative Example 30 | SBR, CMC | 1.550 | 70 | 514 | 359 | 370 | Less than y = -600A + 1300 | Unmeasurable | No deposition | Nil |
| Comparative Example 31 | SBR, CMC | 1.550 | 0 | 514 | 359 | 370 | Less than y = -600A + 1300 | Unmeasurable | No deposition | Nil |

As presented in Table 1 and Fig. 3, in Examples 1 to 9, in which the amount of charge B [mAh/g] of the negative electrode in a full charge state was in the range of $-600 \times A + 1300 \le B \le -830 \times A + 1800$ when the true density of non-graphitizable carbon was A [g/cm$^3$], the nonaqueous solvent contained diethyl carbonate, and the negative composite layer contained a nonaqueous binder, deposition of metal lithium and peeling off of the negative composite layer were not observed and the capacity retention ratio after charge-discharge cycles was favorable. In particular, in Examples 1 to 6, in which the amount of charge B [mAh/g] of the negative electrode in a full charge state was in the range of $-600 \times A + 1400 \le B \le -830 \times A + 1800$, the capacity retention ratio after charge-discharge cycles was further improved.

On the other hand, in Comparative Example 3, Comparative Example 5, Comparative Example 6, Comparative Example 9 to Comparative Example 11, Comparative Example 13, Comparative Example 18, Comparative Example 20, Comparative Example 25 and Comparative Example 27, in which the amount of charge B [mAh/g] of the negative electrode in a full charge state was in the range of $-600 \times A + 1300 \le B \le -830 \times A + 1800$ but the nonaqueous solvent did not contain diethyl carbonate, metal lithium was deposited and the capacity retention ratio after charge-discharge cycles was poor or unmeasurable.

In Comparative Example 4, Comparative Example 12, Comparative Example 19 and Comparative Example 26, in which the amount of charge B [mAh/g] of the negative electrode in a full charge state was in the range of $-600 \times A + 1300 \le B \le -830 \times A + 1800$ but the negative composite layer did not contain a nonaqueous binder, deposition of metal lithium was not observed, but peeling off of the negative composite layer was observed, and the capacity retention ratio after charge-discharge cycles was poor or unmeasurable.

In Comparative Examples 14 to 17, Comparative Examples 21 to 24, and Comparative Examples 28 to 31, in which the amount of charge B [mAh/g] of the negative electrode was less than $-600 \times A + 1300$, deposition of metal lithium and peeling off of the negative composite layer were not observed regardless of the presence or absence of diethyl carbonate as a nonaqueous solvent and a nonaqueous binder in the negative composite layer, but the capacity retention ratio after charge-discharge cycles was poor or unmeasurable.

In Comparative Example 1, Comparative Example 2, Comparative Example 7 and Comparative Example 8, in which the amount of charge B [mAh/g] of the negative electrode was more than $-830 \times A + 1800$, although the nonaqueous solvent contained diethyl carbonate and the negative composite layer contained a nonaqueous binder, metal lithium was deposited and the capacity retention ratio after charge-discharge cycles was unmeasurable.

It can be seen that in the nonaqueous electrolyte energy storage device, as the nonaqueous solvent contains diethyl carbonate and the negative composite layer contains a nonaqueous binder in a case where the amount of charge B [mAh/g] of the negative electrode in a full charge state is in a specific range satisfying $-600 \times A + 1300 \le B \le -830 \times A + 1800$, deposition of the charge support metal and peeling off of the negative composite layer can be suppressed and the capacity retention ratio after charge-discharge cycles is favorable even when the depth of charge of the negative electrode is relatively increased.

As a result, it has been indicated that the nonaqueous electrolyte energy storage device is excellent in the effect of suppressing deposition of charge support metals in a case where the depth of charge of the negative electrode is increased by using non-graphitizable carbon as a negative active material.

INDUSTRIAL APPLICABILITY

The present invention is suitably used as a nonaqueous electrolyte energy storage device including a nonaqueous electrolyte secondary battery used as a power source for electronic equipment such as personal computers and communication terminals, motor vehicles, and the like.

DESCRIPTION OF REFERENCE SIGNS

> 1: Nonaqueous electrolyte energy storage device
> 2: Electrode assembly
> 3: Case
> 4: Positive electrode terminal
> 41: Positive current collector
> 5: Negative electrode terminal
> 51: Negative current collector
> 20: Energy storage unit
> 30: Energy storage apparatus

**Claims**

1.  A nonaqueous electrolyte energy storage device comprising:

    a negative electrode including a negative composite layer containing a negative active material;
    a positive electrode; and
    a nonaqueous electrolyte containing a nonaqueous solvent,
    wherein the nonaqueous solvent contains diethyl carbonate,
    the negative composite layer contains a nonaqueous binder,
    the negative active material contains non-graphitizable carbon; and
    an amount of charge B [mAh/g] of the negative electrode in a full charge state satisfies the following Formula 1 when a true density of the non-graphitizable carbon is A [g/cm$^3$].

$$\text{-}600 \times A + 1300 \le B \le \text{-}830 \times A + 1800 \quad \ldots 1$$

2.  The nonaqueous electrolyte energy storage device according to claim 1, wherein an amount of charge B [mAh/g] of the negative electrode in a full charge state satisfies the following Formula 2.

$$\text{-}600 \times A + 1400 \le B \le \text{-}830 \times A + 1800 \quad \ldots 2$$

3.  The nonaqueous electrolyte energy storage device according to claim 1 or 2, wherein a content of the diethyl carbonate in the nonaqueous solvent is more than 60% by volume.

4.  The nonaqueous electrolyte energy storage device according to any one of claims 1 to 3, wherein a true density A of the non-graphitizable carbon is 1.4 g/cm$^3$ or more and 1.58 g/cm$^3$ or less.

5.  The nonaqueous electrolyte energy storage device according to any one of claims 1 to 3, wherein a true density A of the non-graphitizable carbon is 1.48 g/cm$^3$ or more and 1.55 g/cm$^3$ or less.

6.  The nonaqueous electrolyte energy storage device according to any one of claims 1 to 5, wherein the positive electrode contains a lithium-transition metal composite oxide having an $\alpha$-NaFeO$_2$-type crystal structure as a positive active material.

7.  The nonaqueous electrolyte energy storage device according to any one of claims 1 to 6, comprising:

    a wound electrode assembly in which the positive electrode and the negative electrode are wound in a state of being stacked with a separator interposed therebetween; and
    a prismatic case housing the electrode assembly.

Fig. 1

Fig. 2

Fig. 3

## INTERNATIONAL SEARCH REPORT

International application No.

**PCT/JP2022/006853**

### A. CLASSIFICATION OF SUBJECT MATTER

*H01M 10/052*(2010.01)i; *H01G 11/06*(2013.01)i; *H01G 11/38*(2013.01)i; *H01G 11/42*(2013.01)i; *H01G 11/60*(2013.01)i; *H01M 4/133*(2010.01)i; *H01M 4/587*(2010.01)i; *H01M 4/62*(2006.01)i; *H01M 10/0566*(2010.01)i; *H01M 10/0569*(2010.01)i
FI: H01M10/052; H01M10/0566; H01M4/587; H01M4/62 Z; H01M10/0569; H01G11/06; H01G11/60; H01G11/38; H01G11/42; H01M4/133

According to International Patent Classification (IPC) or to both national classification and IPC

### B. FIELDS SEARCHED

Minimum documentation searched (classification system followed by classification symbols)

H01M10/052; H01G11/06; H01G11/38; H01G11/42; H01G11/60; H01M4/133; H01M4/587; H01M4/62; H01M10/0566; H01M10/0569

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-110155 A (MATSUSHITA ELECTRIC IND CO LTD) 12 April 2002 (2002-04-12) claims | 1-7 |
| A | JP 2008-10183 A (TOYOTA CENTRAL RES & DEV LAB INC) 17 January 2008 (2008-01-17) claims, paragraphs [0056]-[0068] | 1-7 |
| A | JP 2010-80299 A (NISSAN MOTOR CO LTD) 08 April 2010 (2010-04-08) claims, paragraphs [0146]-[0154] | 1-7 |
| P, A | WO 2021/132208 A1 (GS YUASA INT LTD) 01 July 2021 (2021-07-01) claims, paragraphs [0095]-[0139] | 1-7 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2022** | **19 April 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

INTERNATIONAL SEARCH REPORT
Information on patent family members

International application No.

**PCT/JP2022/006853**

| Patent document cited in search report | | | Publication date (day/month/year) | Patent family member(s) | Publication date (day/month/year) |
|---|---|---|---|---|---|
| JP | 2002-110155 | A | 12 April 2002 | (Family: none) | |
| JP | 2008-10183 | A | 17 January 2008 | (Family: none) | |
| JP | 2010-80299 | A | 08 April 2010 | (Family: none) | |
| WO | 2021/132208 | A1 | 01 July 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7335262 A